Europäisches Patentamt

European Patent Office

Office européen des brevets

(11) Publication number: **0 343 844**
**A2**

(12) # EUROPEAN PATENT APPLICATION

(21) Application number: 89305011.2

(51) Int. Cl.⁴: **G11B 23/03**

(22) Date of filing: 17.05.89

(30) Priority: 23.05.88 JP 125186/88

(43) Date of publication of application:
29.11.89 Bulletin 89/48

(84) Designated Contracting States:
DE FR GB IT NL

(71) Applicant: SONY CORPORATION
7-35 Kitashinagawa 6-Chome Shinagawa-ku
Tokyo 141(JP)

(72) Inventor: Takahashi, Kenji c/o Sony Magnetic
Products Inc.
5-6 Kitashinagawa 6-chome Shinagawa-ku
Tokyo(JP)

(74) Representative: Pilch, Adam John Michael et
al
c/o D. Young & Co. 10 Staple Inn
London WC1V 7RD(GB)

(54) **Disc cartridge shutters and methods of producing same.**

(57) A shutter (6) for a disc cartridge (3) is movably attachable to the cartridge (3) which accommodates a disc (4) and has an aperture (5) for exposing a portion of the signal recording surface of the disc (4) to the outside. The shutter (6) comprises cover plates (7) for opening or closing the aperture (5) and a connecting plate (8) interconnecting the cover plates (7). A coating (14) is applied to the surfaces of at least the cover plates (7). The coating (14) elevates the reflectivity of the cover plates (7) to a value higher than that before application of the coating (14).

FIG.3

FIG.1

## DISC CARTRIDGE SHUTTERS AND METHODS OF PRODUCING SAME

This invention relates to disc cartridge shutters for movable attachment to disc cartridges, and to methods of producing such shutters.

It is known to protect a disc, such as an optical disc or a magneto-optical disc on which predetermined signals have been or are to be written, by utilising a disc cartridge which, as disclosed for example in Japanese Laid-Open Patent Applications Nos. 53-257 686 and 63-61 485, is formed of an upper half and a lower half each of synthetic resin, abutted together and mounted in position within a recording and/or reproducing apparatus (referred to hereinafter as a recording/reproducing apparatus) such as a disc player, the disc being contained within the cartridge.

Since the disc cartridge is introduced into the recording/reproducing apparatus with the disc contained therein, an opening has to be formed in each of the opposite planar surfaces of the cartridge, whereby the signal recording surfaces of the disc accommodated within the cartridge may be exposed along the radial direction, and a disc table of a disc drive device for rotatably driving the disc can be accommodated. However, dust or dirt may intrude into the inside of the cartridge through this opening, or the user's hand or finger may touch the disc during the handling of the disc cartridge thereby depositing contaminants, such as grease from fingerprints, on the signal recording surface. These contaminants, when deposited on the signal recording surface, may cause dropout of write or read signals at the time of writing and/or reading of information signals.

Thus it is known for a movable shutter having a U-shaped cross-section to be fitted in the cartridge so as to lie on both the planar surfaces of the cartridge, so that the top opening may be closed by the shutter during the time of non-use when the disc cartridge is not mounted in position within the recording/reproducing apparatus.

As disclosed in US Patent No. US-A-4 688 206, the shutter is repeatedly moved in connection with the attachment and detachment operation thereof to and from the disc cartridge for opening or closing the above opening. The shutter is of a size sufficient to cover the opening formed at the transverse centre of the cartridge and which extends from the centre to the front end surface thereof, the shutter being larger than the surface area of the cartridge. Inasmuch as the shutter is fitted so as to overlie both the planar surfaces of the cartridge, the shutter must be thin enough to be disposed within the recess formed in each planar surface of the cartridge without projecting from such planar surface, or without increasing the overall thickness of the cartridge, thereby permitting smooth attachment and detachment of the disc cartridge to and from the recording/reproducing apparatus.

It is therefore necessary for the shutter provided in the disc cartridge to be endowed with sufficient mechanical strength despite its relatively small thickness. For this reason, such a shutter is prepared by punching from a thin metal plate, such as stainless steel plate, followed by bending to a U-shaped cross-section.

The shutter is generally punched from a metal plate having a smooth surface without subjecting the plate to any pre-treatment. For this reason, contamination caused by grease such as from fingerprints deposited during contact by hands or fingers on the shutter surface becomes noticeable at the time of handling of the disc cartridge. That is, the difference between the gloss proper to the metal plate material and that of the contaminated portions is very marked.

It is also known that, to enhance the decorative effect of the shutter formed of a metal plate material, the plate surface may be subjected to so-called hairline processing consisting of forming a large number of minute parallel grooves or hairlines on the plate surface. However, in this case also, when contaminants such as grease from fingerprints are deposited on the shutter surface, the difference in the gloss between the contaminated portions and the uncontaminated portions similarly becomes noticeable and detracts from the decorative effect of the hairline processing. Moreover, the hairlines are formed as minute grooves and are thus extremely vulnerable to scoring. Flaws or score marks extending at an angle (including a right angle) with respect to the hairlines are most noticeable to viewers.

Above all, in the case of a disc cartridge consisting of a cartridge of synthetic material less liable to be scored or contaminated and a fitted shutter of a metallic material more liable to be scored or contaminated, the overall appearance of the disc cartridge is marred by these score marks or contaminants.

This problem becomes more pronounced when the disc diameter is increased, since the size of the opening through which the disc is exposed to the outside also needs to be increased, and hence a larger shutter for opening or closing the opening is necessary.

Also, the shutter formed of metal may corrode, the corrosion starting from the site of the surface score marks.

In accordance with one aspect of this invention there is provided a disc cartridge shutter for movable attachment to a disc cartridge, the shutter comprising a pair of cover plates for opening or closing apertures in the cartridge exposing at least a portion of a signal recording surface of a disc within the cartridge, and a connecting plate interconnecting said cover plates, characterised in that a coating is applied at least to surface portions of the cover plates.

A preferred embodiment of the invention, to be described in greater detail hereinafter, provides a shutter for a disc cartridge which is not impaired in appearance by score marks or contamination, which has improved durability as a result of prevention of corrosion starting from score marks or contaminants, and which has improved decorative effects.

In accordance with another aspect of this invention there is provided a method of producing a shutter for a cartridge accommodating a disc and having apertures for exposing at least a portion of a signal recording surface of said disc, said shutter being movably mountable on said cartridge and comprising a pair of cover plates for opening or closing said apertures and a connecting plate interconnecting said cover plates, the method comprising:

applying a coating on one side of metal plate material;

punching said metal plate material to form a plate piece in the form of the completed shutter in a developed state; and

bending the plate piece so that the sides having the coating thereon are exposed to the outside to form the cover plates and the connecting plate.

In accordance with a further aspect of this invention there is provided a method of producing a shutter for a cartridge accommodating a disc and having apertures for exposing at least a portion of a signal recording surface of said disc, said shutter being movably mountable on said cartridge and comprising a pair of cover plates for opening or closing said apertures and a connecting plate interconnecting said cover plates, said method comprising:

punching metal plate material to form a plate piece in the form of the completed shutter in a developed state;

bending the plate piece to form the cover plates and the connecting plate; and

applying a coating at least to the outer lateral sides of the cover plates.

The preferred method is capable of producing a disc cartridge shutter which is free of complication in the manufacturing process.

In the preferred embodiment, the coating has the property of raising the reflectivity of the shutter surface to a value higher than that before application of the coating.

According to the preferred embodiment, flaws or contamination caused by grease from fingerprints formed during contact by hands or fingers become less noticeable because of the coating applied to the surface of the cover plates of the shutter, while corrosion is also prevented from occurring at the contaminated portions.

The invention will now be described by way of example with reference to the accompanying drawings, throughout which like parts are referred to by like references, and in which:

Figure 1 is a perspective view of a disc cartridge to be fitted with a shutter according to an embodiment of the present invention;

Figure 2 is a perspective view of the shutter;

Figure 3 is a longitudinal sectional view of the shutter; and

Figures 4A to 4C illustrate steps in a process for producing the shutter embodying the present invention, wherein

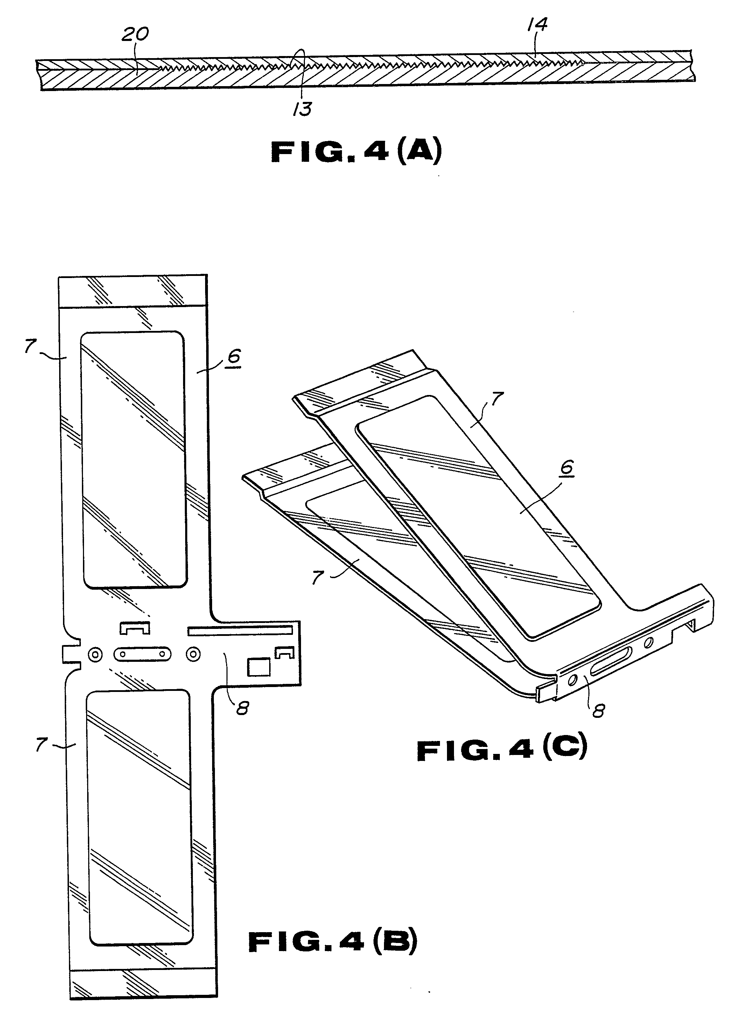

Figure 4A is a sectional view showing a metal plate material to which a coating is applied,

Figure 4B is a plan view showing a plate piece punched from the metal plate material, and

Figure 4C is a perspective view of the plate piece after bending.

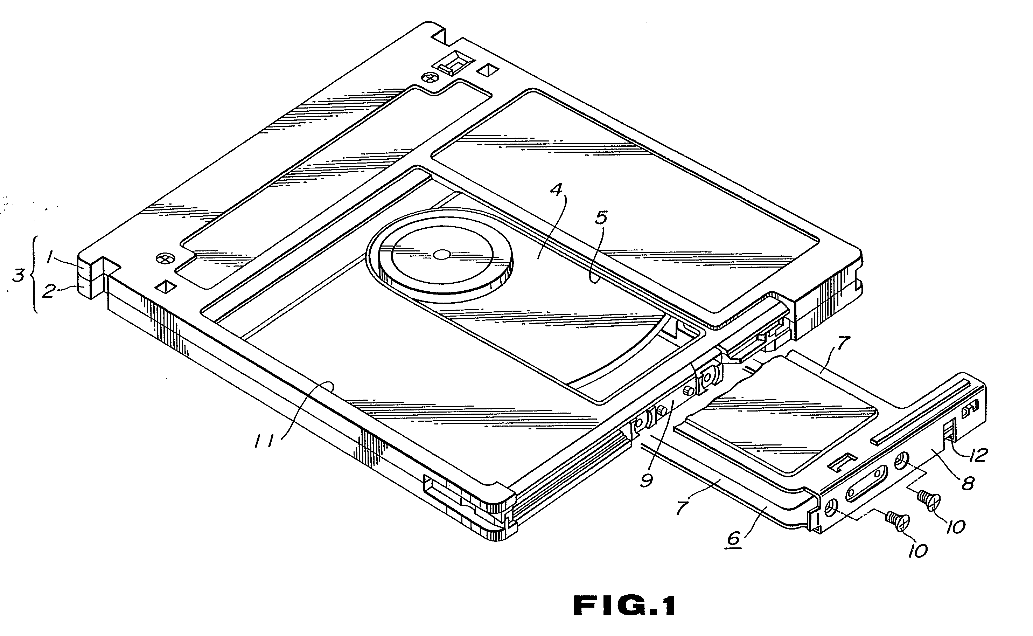

Referring to Figure 1, a disc cartridge is formed by a cartridge 3 formed in turn by an upper half 1 of synthetic material and a lower half 2 of synthetic material, abutted and secured together, and a disc 4, such as an optical disc or a magneto-optical disc, on which predetermined information signals are to be written or have previously been written. In each of the confronting planar surfaces of the cartridge 3, there is formed an opening or aperture 5 which allows exposure of the signal recording surface of the disc 4 within the cartridge 3 in the radial direction and which also allows intrusion of a disc table of a disc driving unit (not shown) for driving the disc rotatably.

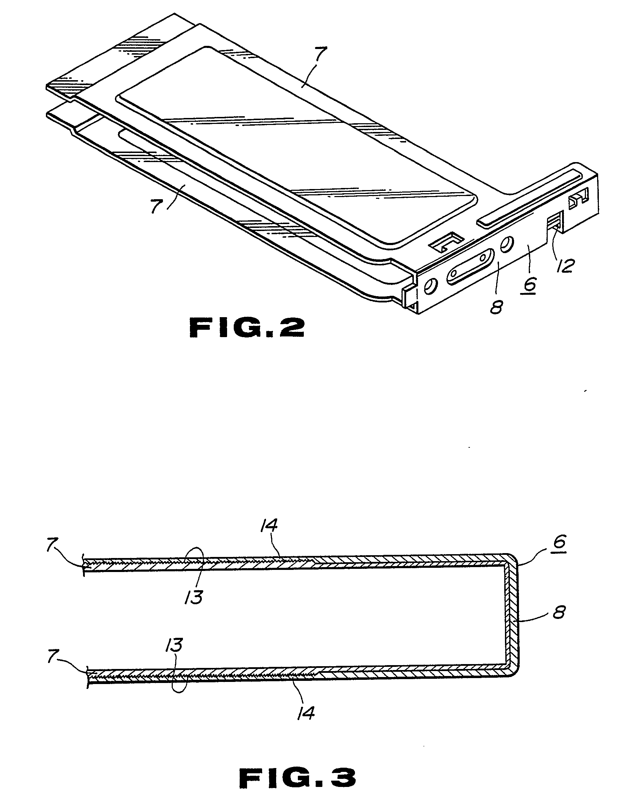

A shutter 6 for closing the apertures 5 while the disc cartridge is not in use (that is, it is not introduced into the recording/reproducing device) is movably mounted on the cartridge 3. The shutter 6 is formed from a metal plate, such as thin stainless steel plate, as shown in Figures 1 and 2. The shutter 6 comprises a pair of cover plates 7 of a size sufficient to cover the apertures 5 formed in both planar surfaces of the cartridge 3, and a connecting plate 8 connecting end edges of the plates 7 together to form a U-shaped structure. The shutter 6 is fitted to the cartridge 3 so that the shutter 6 is positioned in recesses 11 formed in both the planar surfaces of the cartridge 3, and so as to be movable, within the extent of the recesses 11 between a first position in which the apertures 5 are closed and a second position in which the apertures 5 are opened or exposed. The ends of the cover plates 7 of the shutter 6 remote from the connecting plate 8 are formed with bent portions which may be introduced into a channel-shaped groove defined between steps continuous with the recesses 11, guide plates being provided above these steps.

The shutter 6 is movably mounted on the cartridge 3 by having the connecting plate 8 secured with set screws 10 to a slider 9 which is slidably supported on the front end surface of the cartridge 3. The connecting plate 8 of the shutter 6 is provided with an opening 12 into which there is engaged an engaging pin (not shown) of a shutter opening and closing unit (not shown) for opening and closing the shutter 6 on attachment of the disc cartridge to the recording/reproducing device. More specifically, the shutter 6 is normally locked by a shutter locking means (not shown) at a position closing the opening 5, and the arrangement is made so that, when the engaging pin of the shutter opening and closing unit is engaged in the opening 12 in connection with the attachment operation of the disc cartridge to the recording/reproducing device, the engagement between the shutter locking means and the shutter 6 is released, the shutter 6 then being movable by the shutter opening and closing unit for opening and closing the apertures 5.

Referring to Figure 3, the surface of each of the cover plates 7 of the shutter 6 is subjected to so-called hairline processing, whereby minute grooves or hairlines 13 are formed by machining parallel to one another. In addition, a coating 14 is applied over the entire outward facing surface of the shutter 6, including the cover plates 7. This coating 14 has the property of elevating the reflectivity of the cover plates 7 to a value higher than that before application of the coating 14. The coating is formed by application of an epoxy or acryl type resin paint, followed by baking. The surfaces of the cover plates 7 thus provided with the coating 14 having the property of elevating the reflectivity have a degree of glossiness which is improved as compared to that before application of the coating 14.

The cover plates 7 of the shutter 6 are provided with central raised portions which may be formed by press working when the shutter 6 is in the developed state as indicated in Figure 4B.

The shutter 6 having the coating 14 applied thereon may be prepared by the following sequence of operations.

Referring to Figure 4A, the coating 14 is first applied to that surface of a thin metal plate material 20, such as a thin stainless steel plate, on which hairlines 13 have previously been formed by a suitable decorative machining operation. From this plate material 20 thus provided with the coating 14, a plate piece having a contour corresponding to that of the shutter 6 in the developed state is punched, as shown in Figure 4B. This plate piece is then folded so that the coating 14 faces outwards thereby forming a shutter 6 having the two cover plates 7 and the connecting plate 8, as shown in Figure 4C.

It is to be noted that the coating 14 may instead be deposited after formation of the shutter 6 as shown in Figure 4C. When the coating 14 is applied in this manner after formation of the shutter 6, the coating may be applied only to intended coating regions. It suffices to apply the coating only to those surfaces of the cover plates that appear most noticeable to viewers, while the resin coating may be suitably applied to, for example, the surface of the connecting plate 8, as a function of the coating conditions for the resin paint at the time of formation of the coating 14.

From the foregoing, it will be seen that the present technique provides an arrangement in which at least the surfaces of the cover plates of the shutter that appear most noticeable to viewers for attachment of the shutter to the disc cartridge may be coated by a coating having the property of elevating the reflectivity as compared to that before application of the coating, so that flaws or contamination caused by grease from fingerprints formed upon contact by hands or fingers may be made less prominent to viewers, to prevent impairment of the appearance by the flaws or contamination while also preventing corrosion resulting from such flaws or contamination, thereby providing improved durability.

The coating may be applied easily when the shutter is formed from a metal plate material previously provided with the coating, which avoids the complication of the shutter manufacturing process otherwise incurred by the formation of the coating.

Alternatively, only intended coating portions of the shutter may be reliably provided with the coating, by first forming the shutter and then forming the coating on selected parts of the formed shutter.

## Claims

1. A disc cartridge shutter for movable attachment to a disc cartridge, the shutter (6) comprising a pair of cover plates (7) for opening or closing apertures (5) in the cartridge (3) exposing at least a portion of a signal recording surface of a disc (4) within the cartridge (3), and a connecting plate (8) interconnecting said cover plates (7), characterised in that a coating (14) is applied at least to surface portions of the cover plates (7).

2. A shutter according to claim 1, wherein decorative machining (13) is performed on the surface of the cover plates (7).

3. A shutter according to claim 1 or claim 2, wherein said coating (14) comprises an epoxy type resin paint.

4. A shutter according to claim 1 or claim 2, wherein said coating (14) comprises an acryl type resin paint.

5. A shutter according to any one of the preceding claims, wherein the coating (14) has the property of elevating the reflectivity of the shutter surface to a value higher than that before application of the coating (14).

6. A disc cartridge with a shutter movably attached thereto, the shutter (6) being in accordance with any one of the preceding claims.

7. A method of producing a shutter (6) for a cartridge (3) accommodating a disc (4) and having apertures (5) for exposing at least a portion of a signal recording surface of said disc (4), said shutter (6) being movably mountable on said cartridge (3) and comprising a pair of cover plates (7) for opening or closing said apertures (5) and a connecting plate (8) interconnecting said cover plates (7), the method comprising:
applying a coating (14) on one side of metal plate material (20); punching said metal plate material (20) to form a plate piece in the form of the completed shutter (6) in a developed state; and
bending the plate piece so that the sides having the coating (14) thereon are exposed to the outside to form the cover plates (7) and the connecting plate (8).

8. A method of producing a shutter (6) for a cartridge (3) accommodating a disc (4) and having apertures (5) for exposing at least a portion of a signal recording surface of said disc (4), said shutter (6) being movably mountable on said cartridge (3) and comprising a pair of cover plates (7) for opening or closing said apertures (5) and a connecting plate (8) interconnecting said cover plates (7), said method comprising:
punching metal plate material to form a plate piece in the form of the completed shutter (6) in a developed state;
bending the plate piece to form the cover plates (7) and the connecting plate (8); and
applying a coating (14) at least to the outer lateral sides of the cover plates (7).

9. A method according to claim 7 or claim 8, wherein said coating (14) has the property of elevating the reflectivity of the shutter surface to a value higher than that before application of the coating (14).

**FIG.1**

EP 0 343 844 A2

**FIG.2**

**FIG.3**

20    13    14

# FIG. 4 (A)

7    6

8

# FIG. 4 (C)

7    6

7

7

8

# FIG. 4 (B)